(19) Europäisches Patentamt
European Patent Office
Office européen des brevets

(11) EP 4 755 944 A1

(12) **EUROPEAN PATENT APPLICATION**

(43) Date of publication:
**10.06.2026 Bulletin 2026/24**

(21) Application number: **24218417.4**

(22) Date of filing: **09.12.2024**

(51) International Patent Classification (IPC):
***C08G 63/48*** *(2006.01)* ***C08G 63/553*** *(2006.01)*
***C09D 167/08*** *(2006.01)*

(52) Cooperative Patent Classification (CPC):
**C09D 167/08; C08G 63/48; C08G 63/553**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Jotun A/S**
**3202 Sandefjord (NO)**

(72) Inventor: **The designation of the inventor has not yet been filed**

(74) Representative: **Marks & Clerk LLP**
**15 Fetter Lane**
**London EC4A 1BW (GB)**

(54) **EMULSION AND COMPOSITION**

(57) The present invention relates to an alkyd emulsion comprising an alkyd and water, wherein said alkyd comprises, preferably consists essentially of:
(i) 8.0-20 wt% dimer fatty acid;
(ii) 10-25 wt% dipentaerythritol; and
(iii) 50-80 wt% unsaturated fatty acid,
wherein wt% is based on the total weight of said alkyd

EP 4 755 944 A1

## Description

### INTRODUCTION

The present invention relates to an alkyd emulsion comprising an alkyd and water, wherein the alkyd comprises dimer fatty acid, dipentaerythritol and unsaturated fatty acid as well as to methods of making such emulsions. The invention also relates to a coating composition, such as a paint, stain, varnish, lacquer or glaze, comprising the alkyd emulsion, to a container containing the coating composition and to methods of preparing the coating composition. Additionally, the invention relates to a surface having a coating thereon and to an article comprising a coating on at least a part of a surface of the article, wherein the coating comprises the composition. Furthermore, the invention relates to a method of providing a coating on an article, comprising applying the composition to at least a part of the surface of the article and drying and/or curing the composition.

### BACKGROUND

Waterborne alkyds are commonly used on surfaces such as wood. Alkyd-containing compositions are typically applied to wood by brushing or rolling and the alkyd forms a coating, e.g. of up to 120 μm thick, thereon. The alkyd penetrates into the wood and protects the wood against for example water absorbance. Alkyd-containing compositions are also used for aesthetic purposes, e.g. as wood stains.

Many alkyd-containing compositions comprise 25-40 wt% organic solvent. This is because organic solvent readily evaporates and thereby facilitates formation of a coating. There is, however, a need to develop waterborne alkyd-containing compositions that have a low content of volatile organic compounds (VOCs) in light of the stricter regulations on the emission of VOCs requiring the level of organic solvent in coating compositions to be reduced.

Alkyds are fatty acid modified polyesters. The main components present in conventional alkyds are diacids, polyols, and unsaturated fatty acids. Occasionally other types of monomers are also present, e.g. monoacids, saturated fatty acids, acrylates or vinylic monomers. Most diacids used in alkyd manufacture are sourced from petroleum, e.g. isophthalic acid, adipic acid, and phthalic anhydride. This is undesirable due to the increasing need to use biobased materials having a lower carbon footprint.

Alkyd-containing compositions dry by simultaneous evaporation of the solvent, i.e. water, and autoxidation and cross linking of unsaturated fatty acids within the alkyd. Metal catalysts are often used to accelerate the drying process. Absorption of oxygen from the air causes peroxide formation and peroxide decomposition which results in the generation of free radicals that initiate cross-linking and formation of cross-links. The cross-linking reactions and solvent evaporation means that eventually a solidified air-dried coating is formed. Autoxidation and crosslinking of the unsaturated fatty acid component can proceed unaided, but the time for drying of waterborne compositions is often too long for many practical purposes.

Alkyd-containing compositions must also have an appropriate viscosity to enable their facile application by, e.g. brush or roller. It is beneficial for wetting and penetration of the wood substrate that the viscosity of the composition is not too high. Moreover, alkyds intended for emulsification cannot have too high a viscosity for the emulsification process to work. However, reducing the viscosity of the alkyd will increase curing time. There is consequently a challenge to provide waterborne alkyd compositions with both acceptable applicability, and drying time.

Finally, the resulting coating must also be hard to serve its function of protecting the underlying substrate.

### SUMMARY OF INVENTION

Viewed from a first aspect, the present invention provides an alkyd emulsion comprising an alkyd and water, wherein said alkyd comprises, preferably consists essentially of:

(i) 8.0-20 wt% dimer fatty acid;
(ii) 10-25 wt% dipentaerythritol; and
(iii) 50-80 wt% unsaturated fatty acid,

wherein wt% is based on the total weight of said alkyd.

Alternatively, viewed the present invention provides an alkyd emulsion comprising an alkyd and water, wherein said alkyd comprises, preferably consists essentially of:

(i) 10-25 wt% of dimer fatty acid, and oligo fatty acid, wherein at least 70 wt% of said fatty acids is dimer fatty acid;
(ii) 10-25 wt% dipentaerythritol; and
(iii) 50-80 wt% of unsaturated fatty acid,

wherein the wt% of each of (i), (ii) and (iii) is based on the total weight of said alkyd.

Viewed from a further aspect, the present invention provides a method for preparing a coating composition as hereinbefore described comprising mixing an alkyd emulsion and water.

Viewed from a further aspect, the present invention provides a paint, stain, varnish, lacquer or glaze comprising an alkyd emulsion as hereinbefore described.

Viewed from a further aspect, the present invention provides a container containing a coating composition as hereinbefore described.

Viewed from a further aspect, the present invention provides a surface having a coating thereon, wherein said coating comprises the composition as hereinbefore described.

Viewed from a further aspect, the present invention provides an article comprising a coating on at least a part of a surface thereof, wherein said coating comprises the composition as hereinbefore described.

Viewed from a further aspect, the present invention provides a method of providing a coating on an article (e.g. to prevent degradation of the article and/or give an aesthetic appearance), wherein said method comprises:

applying a composition as hereinbefore described to at least a part of a surface of said article; and
drying and/or curing said composition to form a coating on said surface.

Viewed from a further aspect, the present invention provides a use of a composition as hereinbefore described for forming a coating on at least a part of a surface of an article (e.g. to prevent degradation thereof and/or give an aesthetic appearance).

DEFINITIONS

As used herein the term "coating composition" refers to a composition that, when applied to a surface, forms a film or coating thereon.

As used herein the term "alkyd" refers to a polyester modified by the addition of at least one oil and/or fatty acid.

As used herein the term "oxidative drying alkyd" refers to an alkyd that undergoes air oxidation when oxygen in the air reacts with unsaturated groups in its structure. Herein the term "oxidative drying alkyd" is used synonymously with "autoxidative drying alkyd". The oxidation reaction, in conjunction with solvent evaporation, converts liquids to solid coatings over time.

As used herein the term "oil length" is equal to the weight portion of any fatty acid in the alkyd.

As used herein the term "solids content" refers to the proportion of non-volatile material present in a composition. The proportion may be defined in terms of wt% or vol%.

As used herein the term "waterborne alkyd emulsion" refers to an alkyd-containing emulsion wherein the continuous phase is water.

As used herein the term "waterborne composition" or "waterborne coating composition" refers to a composition wherein at least 50 wt% of the solvent is water.

As used herein the term "alkyl" refers to saturated, straight chained, branched or cyclic groups. Alkyl groups may be substituted or unsubstituted.

As used herein the term "cycloalkyl" refers to saturated or partially saturated mono- or bicyclic alkyl ring systems containing 3 to 10 carbon atoms. Cycloalkyl groups may be substituted or unsubstituted.

As used herein the term "alkenyl" refers to unsaturated, straight chained, branched or cyclic groups. Alkenyl groups may be substituted or unsubstituted.

As used herein the term "aromatic" refers to a compound comprising 4n+2, wherein n is an integer of 1 or more, pi electrons in a conjugated arrangement.

As used herein the term "substituted" refers to a group wherein one or more, for example up to 6, more especially 1, 2, 3, 4, 5 or 6, of the hydrogen atoms in the group are replaced independently of each other by the corresponding number of the described substituents. The term "optionally substituted" as used herein means substituted or unsubstituted.

As used herein the term "polycarboxylic acid" refers to a compound comprising more than one -COOH group.

As used herein the term "dimer fatty acid" refers to a dimer of an unsaturated fatty acid.

As used herein the terms "oligomer fatty acid" and "oligo fatty acid" refer to a 3-mer (i.e. trimer), 4-mer, 5-mer, 6-mer of an unsaturated fatty acid and mixtures thereof.

As used herein the term "polyol" refers to a compound comprising more than one -OH group.

As used herein the term "biobased" refers to a product that is wholly derived from materials of biological origin. Biobased materials may, for example, derive from living organisms such as plants, animals, and microorganisms.

As used herein the term "unsaturated fatty acid" refers to $C_{8-24}$ unsaturated fatty acid comprising at least 1 double bond. The unsaturated fatty acids herein are monomeric.

As used herein the terms "paint, stain, lacquer, varnish and glaze" refer to a composition comprising the coating

composition as herein described and optionally solvent which is ready for use, e.g. for applying by brushing or rolling. Thus, the coating composition may itself be a paint, stain, lacquer, varnish or glaze, or the coating composition may be a concentrate to which solvent, e.g. water, is added to produce a paint, stain, lacquer, varnish or glaze.

As used herein the term "Mw" refers to weight average molecular weight.

As used herein the term "Mn" refers to number average molecular weight.

As used herein the term "PDI" or "polydispersity index" in relation to Gel Permeation Chromatography (GPC) measurements refers to the ratio Mw/Mn.

As used herein the term "particle size" is used in relation to the alkyd emulsions to refer to the Z-average diameter size as determined by ISO 22412:2017 using a Malvern Zetasizer Nano S instrument.

As used herein the term "PDI" or "polydispersity index" in relation to particle size measurements refers to the ratio z-average diameter size/weight average diameter size.

As used herein the term "weight % (wt%)", when used in relation to the coating composition, refers to the weight relative to the total weight of the composition, i.e. including non-volatile and volatile components, unless otherwise specified.

## DETAILED DESCRIPTION OF THE INVENTION

The present invention relates to an alkyd emulsion comprising an alkyd and water, wherein said alkyd comprises, preferably consists essentially of:

(i) 8.0-20 wt% dimer fatty acid;
(ii) 10-25 wt% dipentaerythritol; and
(iii) 50-80 wt% unsaturated fatty acid,

wherein wt% is based on the total weight of said alkyd.

Preferably the alkyd is an oxidative drying alkyd.

Preferably the emulsion is a waterborne alkyd emulsion.

The alkyd emulsion of the present invention comprising an alkyd comprising a dimer fatty acid and dipentaerythritol advantageously produces a coating composition having desirably short drying times, reflecting a relatively fast curing process, as well as coatings having a high level of hardness, indicating the resulting coatings are mechanically robust. The viscosity of these coating compositions also makes them easy to apply to substrates by brushing or rolling, and enables the composition to penetrate into porous substrates, e.g. wood, to improve its appearance. Beneficially, these advantages may be achieved using a biobased dimer fatty acid instead of petroleum based diacids, which are conventionally present in alkyds. Furthermore, the viscosity of the alkyds described herein is suitable for facile emulsification prior to the preparation of coating compositions. Moreover, the alkyd emulsion is stable, i.e. the % change in the average diameter of alkyd droplets after storage for 4 weeks at 50 °C, is often less than 10%.

Desirably, the coatings formed have a natural wood appearance, which is important aesthetically. The drying process of alkyd containing compositions can be several hours (dry to touch, e.g. 4-16 hours, depending on the temperature and humidity) even in the presence of a drier. The coating composition of the present invention shortens drying times, improving their appearance, and yields desirably hard coatings.

The coating composition herein described is particularly useful for interior applications. The faster drying, and shorter drying times, of the composition of the invention is particularly useful in this context, where contact with partially dried coating, which can negatively impact the appearance of final coating, is much more likely.

### *Dimer Fatty Acid*

In a preferred alkyd emulsion of the present invention, the dimer fatty acid is biobased. Preferably the dimer fatty acid derives from tall oil, or soybean oil, and more preferably tall oil.

In a preferred alkyd emulsion of the present invention, the dimer fatty acid has a Mw of 450-650, preferably 480-620 and still more preferably 520-580 g/mol.

Processes known in the art may be used to prepare suitable dimer fatty acids. For example, dimer fatty acid may be prepared according to the process disclosed in Polymers **2023,** 15(16), 3345, the entire contents of which are hereby incorporated by reference. Processes for the preparation of dimer fatty acid often also yield relatively smaller amounts of oligomer fatty acid.

Commercially available dimer fatty acid tends to be a mixture of dimer fatty acid, 15-25 wt% oligomer fatty acid and 1-5 wt% unreacted monomer. These are suitable for preparation of the alkyd present in the emulsion of the invention. Commercially available dimer fatty acids are available from, e.g. Kraton, Croda Chemicals and Oleon. For instance, one source of commercially available biobased dimer fatty acid comprises 81 wt% dimer fatty acid, 17 wt% oligomeric fatty acid

and 2 wt% monomeric fatty acid, based on the total weight of material. These materials may also be incorporated into the alkyd structure.

Hence one preferred alkyd emulsion of the present invention, further comprises oligomer fatty acid.

In a preferred alkyd emulsion of the present invention, the alkyd comprises 10-18 wt%, and more preferably 12-16 wt% dimer fatty acid, based on the total weight of said alkyd.

In a preferred alkyd emulsion of the present invention, the alkyd comprises 2.0-6.0 wt%, and more preferably 3.0-5.0 wt% oligomer fatty acid, based on the total weight of said alkyd.

Preferably the wt% of dimer fatty acid, and oligomeric fatty acid present in an alkyd is determined by gas chromatography and MS.

Alternatively viewed the present invention provides an alkyd emulsion comprising an alkyd and water, wherein said alkyd comprises, preferably consists essentially of (e.g. consists of):

(i) 10-25 wt% of a mixture of fatty acids comprising dimer fatty acid, and oligomer fatty acid, wherein at least 70 wt% of said fatty acids is dimer fatty acid, based on the weight of (i);
(ii) 10-25 wt% dipentaerythritol; and
(iii) 50-80 wt% of unsaturated fatty acid,

wherein the wt% of each of (i), (ii) and (iii) is based on the total weight of said alkyd.

Preferably at least 75 wt%, and more preferably at least 80 wt% of said fatty acids present in (i) is dimer fatty acid, based on the total weight of (i).

Preferably less than 25 wt%, more preferably less than 20 wt% and still more preferably less than 15 wt% of said fatty acids present in (i) is oligomeric fatty acid, based on the total weight of (i).

One of the advantages of the alkyd emulsion of the present invention is that it is preferably biobased, i.e. petroleum derived diacids, conventionally present in alkyd, can be avoided. At the same time, the drying time of coating compositions comprising the alkyd emulsion, and the hardness of the resulting coatings, is at least retained, and in some cases improved.

In a preferred alkyd emulsion of the present invention, the alkyd comprises less than 3.0 wt%, more preferably less than 2.0 wt%, still more preferably less than 1.0 wt% and yet more preferably less than 0.5 wt% isophthalic acid and/or phthalic anhydride, based on the total weight of said alkyd. In a more preferred alkyd emulsion of the present invention, the alkyd comprises less than 3.0 wt%, more preferably less than 2.0 wt%, still more preferably less than 1.0 wt% and yet more preferably less than 0.5 wt% phthalic acid and/or phthalic anhydride, based on the total weight of said alkyd. In a still more preferred alkyd emulsion of the present invention, the alkyd comprises less than 3.0 wt%, more preferably less than 2.0 wt%, still more preferably less than 1.0 wt% and yet more preferably less than 0.5 wt% aromatic diacid, based on the total weight of said alkyd.

In a preferred alkyd emulsion of the present invention, the alkyd comprises less than 3.0 wt%, more preferably less than 2.0 wt%, still more preferably less than 1.0 wt% and yet more preferably less than 0.5 wt% adipic acid and/or azelaic acid, based on the total weight of said alkyd.

*Polyol*

The alkyd emulsion of the present invention comprises dipentaerythritol. It has CAS number 126-58-9. Dipentaerythritol has six hydroxyl functional groups per molecule. Without wishing to be bound by theory, it is thought that the faster (i.e. shorter) drying times achieved by the coating compositions comprising the alkyd emulsion of the present invention is due to the higher number or concentration of fatty acids per molecule. Advantageously, this is achieved without significantly increasing the viscosity of the alkyd.

In a preferred alkyd emulsion of the present invention, the alkyd comprises biobased dipentaerythritol.

In a preferred alkyd emulsion of the present invention, the alkyd comprises 12-22 wt%, and more preferably 15-20 wt% dipentaerythritol, based on the total weight of said alkyd.

In another preferred alkyd emulsion of the present invention, dipentaerythritol is at least 90 wt%, more preferably at least 99 wt% and still more preferably 100 wt% of all polyols present. In other words, dipentaerythritol is preferably the sole polyol present in the alkyd. Alternatively expressed, the alkyd emulsion of the present invention preferably does not comprise any polyol, other than dipentaerythritol.

In a preferred alkyd emulsion of the present invention, the alkyd comprises less than 5.0 wt%, more preferably less than 3.0 wt%, still more preferably less than 1.0 wt% and yet more preferably less than 0.5 wt% pentaerythritol, based on the total weight of said alkyd.

In a preferred alkyd emulsion of the present invention, the alkyd comprises less than 5.0 wt%, more preferably less than 3.0 wt%, still more preferably less than 1.0 wt% and yet more preferably less than 0.5 wt% trimethylolpropane, based on the total weight of said alkyd.

In a preferred alkyd emulsion of the present invention, the alkyd comprises less than 5.0 wt%, more preferably less than 3.0 wt%, still more preferably less than 1.0 wt% and yet more preferably less than 0.5 wt% glycerol and/or polyglycerol, based on the total weight of said alkyd.

In a preferred alkyd emulsion of the present invention, the alkyd comprises less than 5.0 wt%, more preferably less than 3.0 wt%, still more preferably less than 1.0 wt% and yet more preferably less than 0.5 wt% polyols containing less than six hydroxyl groups per molecule, based on the total weight of said alkyd.

By limiting or avoiding the presence of pentaerythritol, trimethylolpropane, glycerol, polyglycerol, and/or polyols containing less than six hydroxyl groups per molecule in the alkyd emulsion, all of which are common polyols in alkyds, a relatively fast drying time of compositions comprising the emulsion can be achieved at an acceptable viscosity for application by, e.g. brushing or rolling. Moreover, the result coatings formed are hard.

*Unsaturated Fatty Acid*

In a preferred alkyd emulsion of the present invention, the unsaturated fatty acid present in the alkyd is preferably a $C_{8-24}$, more preferably a $C_{12-24}$ and still more preferably a $C_{14-24}$ unsaturated fatty acid. The unsaturated fatty acid preferably comprises 1, 2 or 3 double bonds. When multiple double bonds are present, they may be conjugated or nonconjugated. The double bonds may have cis or trans geometry.

Representative examples of suitable unsaturated fatty acids include linolenic, linoleic, oleic, myristoleic, palmitoleic, arachidonic, erucic, gadoleic, clupanadonic, ricinoleic, licanic, nisinic, eleostearic, stearidonic, eicosapentaenoic, docosahexaenoic, docosatetraenoic, vaccenic, paullinic, elaidic, gondoic, nervonic and mead acids, soy bean fatty acid, tall oil fatty acid, or mixtures thereof. Preferably the unsaturated fatty acid is selected from linolenic, linoleic and oleic acids, soy bean fatty acid, cotton seed fatty acids, sunflower fatty acids, rapeseed fatty acids, tall oil fatty acid, and mixtures thereof.

Preferably a mixture of unsaturated fatty acids will be present in the alkyd. Typically the fatty acid is derived from natural or synthetic oils, preferably natural oils, and thus the mixture of fatty acids present in the alkyd reflects the mixture present in the oil. Saturated fatty acids and oils may optionally be present. Examples of suitable oils for preparing fatty acids include linseed oil, soybean oil, rapeseed oil, sun flower oil, palm oil, tung oil, calendula oil, wood oil (e.g. pine oil), safflower oil, tuna fish oil, cotton seed oil, and combinations thereof. Preferably the oil for preparing fatty acids is selected from rapeseed oil, linseed oil, tall oil, sunflower oil and soybean oil.

In a preferred alkyd emulsion of the present invention, the alkyd comprises 55-76 wt%, and more preferably 60-70 wt% unsaturated fatty acid, based on the total weight of said alkyd.

*Saturated Fatty Acid*

In a preferred alkyd emulsion of the present invention, the alkyd comprises 1-20 wt%, more preferably 1.5-15 wt%, and still more preferably 2-10 wt% saturated fatty acid, based on the total weight of said alkyd. Representative examples of suitable saturated fatty acids include lauric, myristic, palmitic, stearic, icosanoic, behenic acid and their isomers.

*Preferred emulsions*

In a preferred alkyd emulsion of the present invention, the alkyd comprises, preferably consists essentially of:

(a) 10-18 wt%, and more preferably 12-16 wt% dimer fatty acid;
(b) 12-22 wt%, and more preferably 15-20 wt% dipentaerythritol;
(c) 55-76 wt%, and more preferably 60-70 wt% unsaturated fatty acid,

based on the total weight of said alkyd.

Optionally the alkyd emulsion further comprises 2.0-6.0 wt%, and more preferably 3.0-5.0 wt% oligomer fatty acid, based on the total weight of said alkyd.

Optionally the alkyd further comprises 1-20 wt%, more preferably 1.5-15 wt%, and still more preferably 2-10 wt% saturated fatty acid, based on the total weight of said alkyd.

Another preferred alkyd emulsion of the present invention, the alkyd comprises, preferably consists essentially of:

(a) 10-18 wt%, and more preferably 12-16 wt% dimer fatty acid;
(b) 12-22 wt%, and more preferably 15-20 wt% dipentaerythritol;
(c) 55-76 wt%, and more preferably 60-70 wt% unsaturated fatty acid;

(d) 2.0-6.0 wt%, and more preferably 3.0-5.0 wt% oligomer fatty acid; and;
(e) 1-20 wt%, more preferably 1.5-15 wt% saturated fatty acid

based on the total weight of said alkyd.

The alkyd present in the alkyd emulsion of the present invention is typically prepared by polymerisation. The polymerisation is preferably random. This is because: (i) at least some of the monomers from which the alkyd is derived contain more than 2 reactive groups; (ii) at least some of the compounds from which the alkyd is derived contain only 1 reactive group and (iii) optionally other units are incorporated into the structure (see below). The monomers containing more than 2 reactive groups generate branches in the alkyd and the compounds with a single reactive group stop chain growth. The net effect is that the chains present within the alkyd structure are varied, e.g. in terms of units present and in length. Cross links may also form. For this reason, it is most appropriate to describe the alkyd in terms of the monomers from which they are preferably derived.

Other functional groups that facilitate cross linking may be introduced into the alkyd by techniques well known in the art. For instance, they may be introduced by: i) employing monomers carrying the functional group in the polymerization process used to form the alkyd; or ii) employing monomers bearing selected reactive groups that may be subsequently reacted with a compound carrying the desired functional group or which will react with another group in the alkyd via covalent bonding. However, the selection of the latter groups should ensure that the most significant part of any crosslinking reaction(s) only takes place after application of the alkyd to a substrate. This will avoid an "in-can" build-up of the molecular weight of the alkyd which may be problematic where the viscosity of the emulsion or a composition comprising the emulsion either becomes too high for application or becomes too high for effective leveling of the composition upon its application to a substrate or in the early stages of drying.

Optionally, the alkyd may comprise other repeat units and/or units. Preferably, however, the alkyd present in the alkyd emulsion of the present invention comprises less than 10 wt%, preferably less than 5 wt% and still more preferably less than 3 wt% rosin or rosin derivatives, based on the total weight of said alkyd. Rosins are generally prevalent in conventional alkyds.

An example of a unit that may be included in the alkyd is derived from monocarboxylic acids. Monocarboxylic acids function as chain stoppers. In an alkyd emulsion of the present invention, the alkyd optionally derives from at least one monocarboxylic acid of formula (I):

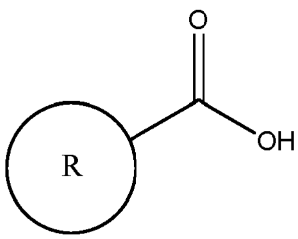

(I)

wherein

R is an organic group. Preferably R is an organic group selected from $C_{5-12}$ aryl, $C_{5-10}$ cycloalkyl and $C_{1-12}$ alkyl.

Examples of suitable monocarboxylic acids include acetic acid, propionic acid, pivalic acid, 2-ethylhexanoic acid, 4-tert-butyl-benzoic acid, cyclopentane carboxylic acid, naphthenic acid, cyclohexane carboxylic acid, 2,4-dimethyl benzoic acid, 2-methyl benzoic acid, benzoic acid, 2,2-dimethylol propionic acid, dimethylolpropionic acid, tetrahydrobenzoic acid and mixtures thereof. Preferred monocarboxylic acids include acetic acid, propionic acid, dimethylolpropionic acid, benzoic acid, tetrahydrobenzoic acid and 4-tert-butyl-benzoic acid. Optionally mixtures of two or more of such monocarboxylic acids may be employed.

Still more preferably the alkyd present in the alkyd emulsion of the present invention comprises less than 5 wt%, more preferably less than 3 wt% and still more preferably less than 2 wt% monocarboxylic acid, based on the total weight of the alkyd. Any monocarboxylic acid present preferably derives from the dimer fatty acid, i.e. is present as unreacted starting material from the preparation of dimer fatty acid.

Another type of unit that may be incorporated during synthesis of the alkyd is derived from hydroxyfunctional carboxylic acids. Representative examples of such acids include dimethylolpropionic acid, dimethylolbutyric acid, trihydroxymethylacetic acid, dihydroxymethylvaleric acid, dihydroxypropionic acid, heptonic acid, citric acid, tartaric acid, dihydroxymalonic acid, gluconic acid, hydroxybenzoic acid, dihydroxybenzoic acid, hydroxyvaleric acid, hydroxypropionic acid and/or hydroxypivalic acid and/or lactones and other inner ether, such as glycolide, valerolactone, propiolactone, caprolactone and/or polycaprolactone. Still more preferably the alkyd present in the alkyd emulsion of the present invention comprises less than 5 wt%, more preferably less than 3 wt% and still more preferably less than 2 wt% units derived from hydroxyfunctional carboxylic acids, based on the total weight of the alkyd.

Another type of unit that may be incorporated during synthesis of the alkyd is derived from isocyanates. Suitable isocyanates include methyl isocyanate, toluene diisocyanate, diphenyl methane diisocyanate, hexamethylene diisocyanate, 1,6-hexane diisocyanate, dicyclo-hexylmethane diisocyanate, isophorone diisocyanate, tetramethylxylene diisocyanate, dicyclohexyl methane diisocyanate, furan diisocyanate, tetrahydrofuran diisocyanate, cyclohexylene diisocyanate, xylene diisocyanate, naphthalene diisocyanate, phenylene diisocyanate, nonane triisocyanate and/or triphenyl methane triisocyanate. Further suitable isocyanate based components include isocyanurates, biurets and allophanates. Still more preferably the alkyd present in the alkyd emulsion of the present invention comprises less than 5 wt%, more preferably less than 3 wt% and still more preferably less than 2 wt% units derived from isocyanates, based on the total weight of the alkyd.

Another type of unit that may be incorporated during synthesis of the alkyd is that comprising epoxy groups. Representative examples of suitable compounds include 1,2-epoxy-3-allyloxypropane, 1-allyloxy-2,3-epoxypropane, 1,2-epoxy-3-phenoxypropane, 1-glycidyloxy-2-ethylhexane, bisphenol A-diglycidyl ether or a reaction product thereof, diglycidyl ether of pentaerythritol spiroglycol (glycidyl ether of 2,4,8, 10-tetraoxaspiro[5.5]undecane-3,9-diethanol), diglycidyl terephthalate, epoxidised soybean fatty acid, epoxidised soybean oil, epoxidised polyvinyl alcohol, epoxidised dehydrated castor oil, epoxidised linseed oil and 3,4-epoxy- -cyclohexylmethyl-3,4-epoxycyclohexane-carboxylate. Still more preferably the alkyd present in the alkyd emulsion of the present invention comprises less than 5 wt%, more preferably less than 3 wt% and still more preferably less than 2 wt% units comprising epoxy groups, based on the total weight of the alkyd

The alkyd may optionally be modified by compounds such as thiols, polythiols, thio acids, polythio acids, amines, polyamines, vinylics, such as styrene and vinyltoluene, silicones, oxetanes and/or hydroxyoxetanes, such as oxetanes of 2-alkyl-1,3-propanediols, 2,2-dialkyl-1,3-propanediols, 2-alkyl-2-hydroxyalkyl-1,3-propanediols, 2,2-dihydroxyalkyl-1,3-propanediols as well as dimers and polymers thereof.

In a preferred alkyd present in the alkyd emulsion of the present invention, the alkyd comprises less than 10 wt%, preferably less than 5.0 wt%, more preferably less than 2.0 wt%, and yet more preferably less than 1.0 wt% styrene, vinyltoluene, o(-methylstyrene), divinylbenzene, acrylic acid, methacrylic acid, esters of maleic and fumaric acid, methyl acrylate, ethyl acrylate, propyl acrylate, butyl acrylate, isopropyl acrylate, isobutyl acrylate, pentyl acrylate, isoamyl acrylate, hexyl acrylate, 2-ethylhexyl acrylate, octyl acrylate, 3,5,5-trimethylhexyl acrylate, decyl acrylate, dodecyl acrylate, hexadecyl acrylate, methyl methacrylate, ethyl methacrylate, propyl methacrylate, isopropyl methacrylate, butyl methacrylate, cyclohexyl acrylate, cyclohexyl methacrylate, pentyl methacrylate, isoamyl methacrylate, hexyl methacrylate, 2-ethylbutyl methacrylate, octyl methacrylate, 3,5,5-trimethylhexyl methacrylate, decyl methacrylate, dodecyl methacrylate, hexadecyl methacrylate, octadecyl methacrylate, acrylonitrile, methacrylonitrile, vinyl acetate, vinyl chloride and combinations thereof, based on the total weight of the alkyd. Preferably the alkyd present in the alkyd emulsion of the present invention comprises less than 10 wt%, preferably less than 5.0 wt%, more preferably less than 2.0 wt%, and yet more preferably less than 1.0 wt% alkyl acrylates, vinylic monomers and combinations thereof, based on the total weight of the alkyd. More preferably the alkyd present in the alkyd emulsion of the present invention, the alkyd comprises less than 10 wt%, preferably less than 5.0 wt%, more preferably less than 2.0 wt%, and yet more preferably less than 1.0 wt% ethylenically unsaturated monomers, based on the total weight of the alkyd.

It is well known in the art to "deformulate" an alkyd to determine the monomers from which it is derived. This may be done, for example, by pyrolysis followed by gas chromatography and mass spectrometry analysis. Alternatively, it may be done by hydrolysis followed by HPLC and mass spectrometry analysis. Suitable methodology is described in Journal of Analytical and Applied Pyrolysis Volume 18, Issues 3-4, February 1991, pages 233-244.

*Alkyd properties*

Alkyds are often characterised by their oil length. In a preferred alkyd emulsion of the present invention, the alkyd has an oil length of 50-80 wt%, more preferably 55 to 78 wt% and still more preferably 60-75 wt%. Alkyds comprising at least 60 wt% fatty acids are generally referred to as long oil alkyds whilst alkyds comprising less than 40 wt% fatty acids are generally referred to as short oil alkyds. Alkyds with 40 to less than 60 wt% fatty acids are generally referred to as medium oil alkyds. Preferred alkyd present in the emulsion of the present invention is long oil alkyd.

The degree of modification by fatty acids plays an important role in determining the properties of the alkyd when it is incorporated into compositions. By modifying the alkyd with unsaturated fatty acids, the alkyd becomes auto-oxidative curing which is a key stage in the drying process. The auto-oxidative curing of the composition preferably takes place at 0 to 40°C, preferably from 5 to 30°C and most preferably from 10 to 25°C.

In a preferred alkyd emulsion of the present invention, the alkyd has an acid number of 6.0-16 mg KOH/g, more preferably 8.0-15 mg KOH/g and still more preferably 8.0-12 mg KOH/g.

In a preferred alkyd emulsion of the present invention, the alkyd has a Mn of 1500-5000, more preferably 1700-4000 and still more preferably 1800-3000 g/mol.

In a preferred alkyd emulsion of the present invention, the alkyd has a Mw of 2000-50000, more preferably

2600-40000 and still more preferably 2700-30000 g/mol.

In a preferred alkyd emulsion of the present invention, the alkyd has a PDI of 1.0-20, more preferably 1.2-15 and still more preferably 1.5-10.

In a preferred alkyd emulsion of the present invention, the alkyd has a Cone and Plate viscosity of 1.0-7.0 P, more preferably 2.0-6.0 P and still more preferably 3.0-5.0 P.

In the alkyd emulsion of the present invention the alkyd droplets are preferably dispersed in a continuous aqueous phase. Preferably the alkyd droplets have an average diameter of 100-1000 nm, more preferably 120-800 nm and still more preferably 150-600 nm, as determined by ISO 22412:2017.

The alkyd emulsion of the present invention preferably comprises 40-60 wt% alkyd, and more preferably 45-55 wt% alkyd, based on the total weight of the emulsion. The emulsion may optionally comprise other conventional additives such as surfactants, neutralizing agents, preservatives and defoamers.

In a preferred alkyd emulsion of the present invention, the emulsion has a pH of 6.0-10, more preferably 6.5-9.5 and still more preferably 7.0-9.0.

In a preferred alkyd emulsion of the present invention, the emulsion has a Brookfield viscosity of 500-6000 cP, more preferably 650-4000 cP and still more preferably 750-2000 cP.

In a preferred alkyd emulsion of the present invention, the % change in the average diameter of alkyd droplets after storage for 4 weeks at 50 °C, e.g. as described in the examples herein, is less than 40%, more preferably less than 20% and still more preferably less than 10%.

In a preferred alkyd emulsion of the present invention, the emulsion has a solids content of 40-60 wt%, more preferably 42-57 wt% and still more preferably 45-55 wt%, based on the total weight of the emulsion.

*Water*

The alkyd emulsion of the present invention is waterborne. The water used to form the emulsions may be deionised water, or soft or pure tap water. Preferably the water has a hardness of less than 5 dH°.

Preferably the alkyd emulsion comprises 40-60 wt% water, and more preferably 45-55 wt% water, based on the total weight of the emulsion.

Optionally surfactants may be utilised to assist in the dispersion of the alkyd in the water. Suitable surfactants include conventional anionic, cationic and ionic surfactants and mixtures thereof.

*Method*

A method of making an alkyd emulsion as herein described forms a further aspect of the invention. This comprises mixing water and an alkyd comprising dimer fatty acid, dipentaerythritol and unsaturated fatty acid.

A preferred method of the invention comprises an inversion emulsification. The inversion emulsification may be carried out by any conventional technique. Preferably water is added gradually to an alkyd comprising dimer fatty acid, dipentaerythritol and unsaturated fatty acid to achieve an oil in water emulsion. Any conventional stirring or agitation method may be employed.

*Coating composition*

The present invention also relates to a coating composition comprising an alkyd emulsion as hereinbefore described.

Preferably the coating composition comprises 10-70 wt%, more preferably 20-60 wt% and still more preferably 30-50 wt% alkyd emulsion, based on the total weight of the composition.

Preferably the coating composition comprises 5-35 wt%, more preferably 10-30 wt% and still more preferably 15-25 wt% alkyd, based on the total weight of the composition.

Optionally the coating composition further comprises one or more of: (i) drier; (ii) rheology modifier; (iii) organic solvent; (iv) defoamer; (v) fillers and/or extenders, (vi) pigments; (vii) biocides; and/or (viii) additives.

Drier

Optionally, and preferably, the coating composition of the present invention further comprises a drier.

The time for the coating composition of the invention to dry depends on the concentration and types of unsaturated fatty acids present in the alkyd. Preferably, however, the auto-oxidation and crosslinking reaction is accelerated by the presence of a metal-based drying catalyst, commonly referred to as a "drier". The metal within the drying catalyst catalyzes autoxidation by forming a complex with both atmospheric oxygen and the double bonds of the unsaturated fatty acid groups within the composition.

Optionally a mixture of driers can be used in the coating compositions of the invention. More preferably the composition of the present invention comprises 1 to 4 different driers.

Examples of known driers include compounds, polymers and polyvalent salts containing cobalt, calcium, vanadium, copper, zinc, iron, zirconium, manganese, barium, zinc and strontium. Preferred driers comprise a mixture of compounds, polymers, and polyvalent salts. More preferred driers comprise a mixture of at least 2 metals. When the drier is in salt form, the afore-mentioned metals preferably form the cation and halides, nitrates, sulphates, carboxylates, such as acetates, ethylhexanoates, octanoates and naphthenates, or acetoacetonates form the anion. Other known driers include ethylhexanoate and neodecanoate. Any conventional drier may be present in the compositions of the invention.

Preferred compositions of the present invention comprise 0.05-0.5 wt%, more preferably 0.1-0.4 wt% and still more preferably 0.1-0.3 wt% of drier, based on the solid content of drier present in the total weight of the composition.

Rheology modifier

The compositions of the present invention optionally comprise one or more rheology modifiers. When the coating composition is for application to an overhead or non-horizontal surface (e.g. a ceiling or wall), the composition preferably comprises a rheology modifier. The rheology modifier advantageously reduces the spatter and/or sag which occurs during application of the coating composition.

The rheology modifier present in the coating compositions of the invention is preferably a polysaccharide and/or an associative rheology modifier and/or a clay. Cellulosic rheology modifiers (e.g. hydroxyethyl cellulose) may also be used.

Exemplary polysaccharide rheology modifiers for use in the coating compositions include alginin, guar gum, locust bean gum and xanthan gum.

Exemplary associative rheology modifiers for use in the coating compositions include non-ionic synthetic associative rheology modifier (niSAT), hydrophobically modified ethoxylated urethanes (HEUR), hydrophobically modified alkali-swellable emulsions (HASE), and styrene-maleic anhydride terpolymers (SMAT). Acidic acrylate copolymers (cross-linked) of ethyl acrylate and methacrylic acid, and acrylic terpolymers

(cross-linked) of ethyl acrylate, methacrylic acid, and nonionic urethane surfactant monomer may also be used as associative rheology modifiers. When one or more suitable associative rheology modifiers are used, the thickening reaction is caused in part by either association between the associative rheology modifier and at least one other particle of the coating composition (e.g., a pigment particle or polymer particle) or another associative rheology modifier molecule.

Exemplary clay rheology modifiers for use in the coating compositions of the invention include kaolin clay, smectite clay, illite clay, chlorite clay, synthetic clay or organically modified clay. Preferred clay rheology modifiers are synthetic clay or an organically modified clay.

Preferred compositions of the invention comprise 0.1-5.0 wt% rheology modifier, still more preferably 0.1-3.0 wt% rheology modifier and yet more preferably 0.2-3.0 wt% rheology modifier, based on the total weight of the composition.

Organic solvent

The coating composition of the present invention optionally comprises an organic solvent.

The organic solvent present may derive from the production of alkyd, from other components present in the composition that are provided in solvents and/or from solvent added into the composition. The solvent is preferably volatile. Suitable solvents present in the compositions of the invention are commercially available.

Examples of suitable organic solvents and thinners are aromatic hydrocarbons such as xylene, toluene, mesitylene; ketones such as methyl ethyl ketone, methyl isobutyl ketone, methyl amyl ketone, methyl isoamyl ketone, cyclopentanone, cyclohexanone; esters such as butyl acetate, tert-butyl acetate, amyl acetate, isoamyl acetate, ethylene glycol methyl ether acetate, propylene glycol methyl ether acetate; ethers such as ethylene glycol dimethyl ether, diethylene glycol dimethyl ether, dibutyl ether, dioxane, tetrahydrofuran; alcohols such as 1-propanol, 2-propanol, n-butanol, isobutanol, benzyl alcohol; ether alcohols such as butoxyethanol, 1-methoxy-2-propanol; ester alcohols such as 2,2,4-trimethyl-1,3-pentanediol monoisobutyrate (texanol), aliphatic hydrocarbons such as white spirit; and optionally a mixture of two or more solvents and thinners.

The amount of solvent present in the coating composition of the present invention is preferably as low as possible as this minimizes the VOC content. Preferably solvent is present in the composition of the invention in an amount of 0-13 wt%, more preferably 1-12 wt% and still more preferably 2-12 wt% based on the total weight of the composition. The skilled person will appreciate that the solvent content will vary depending on the other components present.

Defoamer

The coating composition of the present invention optionally comprises a defoamer.

Defoamers, which are sometimes referred to as air release additives, are commonly used in waterborne coating compositions due to their comparably higher concentration of surfactants and high surface tension relative to solvent borne compositions.

In the coating composition of the present invention, the type of defoamer is not specifically limited and any suitable defoamer may be used. Common defoamers can be divided into mineral oil defoamers, silicon defoamers and polymer defoamers. Commercially available defoamers often contain a mixture of these types, often in combination with solvents and solid particles.

The amount of defoamer present in the coating composition of the present invention is preferably 0.05-2.0 wt%, more preferably 0.1-1.5 wt% and still more preferably 0.1-1.0 wt% based on the total weight of the composition. The skilled person will appreciate that the defoamer content will vary depending on the other components present.

Pigment

The coating composition of the present invention optionally comprises one or more pigments.

The pigments may be inorganic pigments, organic pigments or a mixture thereof.

Representative examples of suitable inorganic pigments include metal oxides (e.g. titanium dioxide, iron oxides, chrome oxides etc.), Complex Inorganic Colour Pigments (CICPs) (e.g. chromium and nickel titanate, cobalt blue and green aso), cadmium pigments, lead chromates, bismuth vanadate pigments, zinc sulfide, zinc oxide, and carbon black.

Representative examples of classes of suitable organic pigments include azo pigments and polycyclic pigments. Azo pigments include monoazo yellow and orange pigments, disazo pigments, beta-naphthol pigments, naphthol AS pigments, azo pigment lakes, benzimidazolone pigments, disazo condensation pigments, metal complex pigments and isoindolinone and isoindoline pigments. Polycyclic pigments include phtalocyanine pigments (blue & green), quinacridone pigments, perylene and perinone pigments, thioindigo pigments, anthtaquinone pigments, dooxazine pigments, triarylcarbonium pigments, quinopthalone pigments, anthanthrone, pyrazolo quinazolone and diketo-pyrrolo-pyrrol pigments.

Specific examples of non-white coloured pigments include iron oxides, zinc sulfide, chromium oxide green, cadmium pigments, naphthol red, phthalocyanine compounds (e.g. phthalocyanine green, phthalonitrile blue), ultramarine blue azo pigments and carbon black.

During preparation of the coating composition of the present invention the pigment may be ground and mixed with the other components present therein. This method provides coating compositions having a ready-made colour. Alternatively, the pigment may be added to the coating composition after all of the other components of the composition have been mixed together in a post-addition step. This process is often referred to as tinting.

Preferably the total amount of pigment present in the composition of the invention is 0-25 wt%, more preferably 0-10 wt% and still more preferably 0.5-8 wt%, based on the total weight of the composition. The skilled person will appreciate that the pigment content will vary depending on the other components present and the end use of the coating composition.

Fillers and Extenders

The coating composition of the present invention optionally comprises one or more fillers and/or extenders. They may be inorganic or organic.

Suitable inorganic fillers and/or extenders are commercially available. Nepheline syenite, wollastonite, diatomaceous earth, perlite, kaolin, quartz, talc, mica, dolomite, carbonates (e.g. calcium carbonate) and sulphates (e.g. barium sulphate) are examples of suitable inorganic fillers and/or extenders for the coating composition of the present invention. Typically, inorganic fillers and extenders are substantially insoluble in the coating composition, and are dispersed therein.

The coating composition of the present invention optionally comprise one or more organic fillers. The organic filler is preferably solid organic filler particles. Thus any solid organic filler particles present, are added separately to the alkyd emulsion during preparation of the coating composition of the invention.

Preferably the solid organic filler particles present in the coating composition of the invention are non-expandable and/or non-compressible at atmospheric conditions, i.e. 20 °C and 1 atmosphere. This is beneficial as it means that the filler particles do not change shape and/or size during processing.

The solid organic filler particles preferably comprise, and more preferably consist of poly(meth)acrylate, polystyrene, polyacrylamide, polyurethane, polysiloxane, polyolefin (e.g. polyethylene, polypropylene, polytetrafluoroethylene), polyacrylonitrile, nylon, poly(vinyl ester), and/or copolymers thereof.

Preferred solid organic filler particles present in the coating composition of the present invention are cross-linked.

The solid organic filler particles optionally present in the coating composition of the invention are substantially spherical and more preferably spherical.

Preferably the solid organic filler particles have a $D_{50}$ of 1 to 50 μm, more preferably 1 to 40 μm and still more preferably 5-30 μm, as determined by ISO 13320:2009 using a Malvern Mastersizer 2000.

A preferred coating composition of the present invention comprises 0-30 wt%, more preferably 0-25 wt% and still more preferably 0-20 wt% of filler and/or extender.

Biocides

Optionally the coating composition of the invention comprises a biocide. The terms biocide, antimicrobial agent, biologically active compounds, film preservative, in can preservative and toxicant is used in the industry to describe known compounds that act to prevent biological growth, e.g. growth of mould, algae, bacteria and the like. The biocide may be inorganic, organometallic or organic. Preferred biocides present in the compositions of the invention are organic agents. Suitable biocides are commercially available.

The coating compositions of the present invention optionally comprise in can preservative (PT 6), dry film biocide (PT 7) and/or wood preservatives (PT 8). Mixtures of different biocides may also be employed. Preferred compositions of the present invention comprise at least one in can preservative. If the coating composition is designed for use in rooms such as bathrooms, wet rooms and/or shower rooms, it is preferred that the compositions of the present invention comprise at least one dry film biocide and one in can preservative. It should be noted here that some compounds perform more than one of these functions.

Representative examples of suitable in can preservatives that may be present in the coating compositions of the present invention include:

Isothiazolines: Reaction mass of 5-chloro-2-methyl-4-isothiazolin-3-one and 2-methyl-2H-isothiazol-3-one (3:1) (CIT/MIT) (PT6, 0.0001-0.01% (1-100 ppm)); 5-chloro-2-methyl-4-isothiazolin-3-one (CIT) (PT6, 0.0001-0.01% (1-100 ppm)); 2-Methyl-4-isotiazolin-3-one (MIT)(PT6, 0.0001-0.05 (1-500 ppm)); 2-Methyl-1,2-Benzisothiazol-3(2H)-one (MBIT)(PT6, 0.0001-0.05 (1-500 ppm)); 1,2-Benzisothiazolin-3-one (BIT)(PT6, 0.0001-0.05 (1-500 ppm)); 2-Octyl-2H-isothiazol-3-one (OIT)(PT6, 0.0001-0.5% (1-5000 ppm)); 2-butyl-benzo[d]isothiazol-3-one (BBIT) (PT6, 0.0001-0.5% (1-5000 ppm));

Amides/Ureas: Benzamide, 2,2'-dithiobis (DTBMA)(PT6, 0.0001-0.05% (1-500 ppm)), 2,2-dibromo-2-cyanoacetamide (DBNPA)(PT6, 0.0001-0.05% (1-500 ppm));

Pyrithiones: Zinc pyrithione (ZnPT)(PT6, 0.0001-0.05% (1-500 ppm)); Sodium pyrithione (NaPT)(PT6, 0.0001-0.05% (1-500 ppm));

Organohalogens: 2-Bromo-2-nitro-1,3-propanediol (Bronopol)(PT6, 0.001-0.05% (1-500 ppm);

Carbamates: 3-iodo-2-propynylbutylcarbamate (IPBC)(PT6, 0.01-0.5% (100-5000 ppm));

Silver chemistry: Reaction mass of titanium dioxide and silver chloride (PT6, 0.0001-0.5% (1-5000 ppm)); and

Formaldehyde donor/$CH_2O$ adducts: N,N-Methylenebismorpholine (MBM)(PT6, 0.0001-0.5% (1-5000 ppm)); (ethylenedioxy)dimethanol (EDDM) (PT6, 0.0001-0.5% (1-5000 ppm)); α, α', α"-trimethyl-1,3,5-triazine-1,3,5(2H,4H,6H)-triethanol (HPT); 3,3'-methylenebis[5-methyloxazolidine] (Oxazolidin/MBO) (PT6, 0.0001-0.5% (1-5000 ppm)); Sodium N-(hydroxymethyl)glycinate; Tetrahydro-1,3,4,6-tetrakis(hydroxymethyl)imidazo[4,5-d]imidazole-2,5(1H,3H)-dione (TMAD)(PT6, 0.0001-0.5% (1-5000 ppm)); Tetrakis(hydroxymethyl)phosphonium sulphate(2:1) (THPS) (PT6, 0.0001-0.5% (1-5000 ppm)); Methenamine 3-chloroallylochloride (CTAC)(PT6, 0.0001-0.5% (1-5000 ppm)); 2,2',2"-(hexahydro-1,3,5-triazine-1,3,5-triyl)triethanol (HHT)(PT6, 0.0001-0.5% (1-5000 ppm)); 1,3-bis(hydroxymethyl)-5,5-dimethylimidazolidine-2,4-dione (DMDMH)(PT6, 0.0001-0.5% (1-5000 ppm)); 7a-ethyldihydro-1H,3H,5H-oxazolo[3,4-c]oxazole (EDHO)(PT6, 0.0001-0.5% (1-5000 ppm)); cis-1-(3-chloroallyl)-3,5,7-triaza-1-azoniaadamantanechloride (cis CTAC)(PT6, 0.0001-0.5% (1-5000 ppm)); (benzyloxy)methanol(PT6, 0.0001-0.5% (1-5000 ppm)).

Representative examples of suitable dry film biocides that may be present in the coating compositions of the present invention include:

Isothiazolines: 4,5-Dichlor-2-n-octyl-4-isotiazolin-3-one (DCOIT)(PT7, 0.05-0.2% (500-2000 ppm); 2-Octyl-2H-isothiazol-3-one (OIT)(PT7, 0.1-0.4% (1000-4000 ppm)); 2-butyl-benzo[d]isothiazol-3-one (BBIT)(PT7, 0.0001-0.5% (1-5000 ppm)); 2-thiazol-4-yl-1H-benzoimidazole (Thiabendazole)(PT7, 0.01-0.5% (100-5000 ppm));

Azoles: Methyl (E)-2-{2-[6-(2-cyanophenoxy)pyrimidin-4-yloxy]phenyl}-3-methoxyacrylate (Azoxystrobin)(PT7, 0.01-0.5% (100-5000 ppm)); 1-[[2-(2,4-dichlorophenyl)-4-propyl-1,3-dioxolan-2-yl]methyl]-1H-1,2,4-triazole (Propiconazole)(PT7, 0.01-0.5% (100-5000 ppm)); 1-(4-chlorophenyl)-4,4-dimethyl-3-(1,2,4-triazol-1-ylmethyl)pentan-3-ol (Tebuconazole)(PT7, 0.01-0.5% (100-5000 ppm));

Amides/Ureas: 3-(3,4-dichlorophenyl)-1,1-dimethylurea (Diuron)(PT7, 0.1-1.0% (1000-10,000 ppm)); 3-(4-Isopropylphenyl)-1,1-dimethylurea (Isoproturon)(PT7, 0.01-0.5% (100-5000 ppm))

Pyrithiones: Zinc pyrithione (ZnPT)(PT7, 0.0001-0.05% (1-500 ppm)); Sodium pyrithione (NaPT)(PT7, 0.0001-0.05% (1-500 ppm));

Organohalogens: 4-(2,2-difluoro-1,3-benzodioxol-4-yl)-1H-pyrrole-3-carbonitrile (Fludioxonil)(PT7, 0.01-0.5% (100-5000 ppm)); Dichloro-N-[(dimethylamino)sulphonyl] fluoro-N-(ptolyl)methanesulphenamide (Tolylfluanid) (PT8, 0.01-0.5% (100-5000 ppm));

Carbamates: 3-iodo-2-propynylbutylcarbamate (IPBC)(PT7, 0.05-0.5% (500-5000 ppm)); Methyl 2-benzimidazoie carbamate (Carbendazim)(PT7, 0.01-0.5% (100-5000 ppm))

Silver chemistry: Reaction mass of titanium dioxide and silver chloride (PT7, 0.0001-0.5% (1-5000 ppm)); Silver copper zeolite (PT7, 0.0001-0.5% (1-5000 ppm)); Silver nitrate (PT7, 0.0001-0.5% (1-5000 ppm)); Silver phosphate glass (PT7, 0.0001-0.5% (1-5000 ppm)); Silver sodium hydrogen zirconium phosphate (PT7, 0.0001-0.5% (1-5000 ppm)); Silver zeolite (PT7, 0.0001-0.5% (1-5000 ppm)); Silver zinc zeolite (PT7, 0.0001-0.5% (1-5000 ppm)); and

Triazines: (4E)-4-(Ethylimino)-N-(2-methyl-2-propanyl)-6-(methylsulfanyl)-1,4-dihydro-1,3,5-triazin-2-amine (Terbutryn)(PT7, 0.1-0.3% (1000-3000 ppm)).

Representative examples of suitable wood preservatives that may be present in the coating compositions of the present invention include:

Isothiazolines: 4,5-Dichlor-2-n-octyl-4-isotiazolin-3-one (DCOIT)(PT8, 0.01-0.5% (100-5000 ppm); 2-Octyl-2H-isothiazol-3-one (OIT)(PT8, 0.0001-0.5% (1-5000 ppm)); 2-thiazol-4-yl-1H-benzoimidazole (Thiabendazole)(PT8, 0.01-0.5% (100-5000 ppm));

Azoles: 1-[[2-(2,4-dichlorophenyl)-4-propyl-1,3-dioxolan-2-yl]methyl]-1H-1,2,4-triazole (Propiconazole)(PT8, 0.01-0.5% (100-5000 ppm)); 1-(4-chlorophenyl)-4,4-dimethyl-3-(1,2,4-triazol-1-ylmethyl)pentan-3-ol (Tebuconazole)(PT8, 0.01-0.5% (100-5000 ppm));

Organohalogens: Dichloro-N-[(dimethylamino)sulphonyl] fluoro-N-(ptolyl)methanesulphenamide (Tolylfluanid) (PT8, 0.01-0.5% (100-5000 ppm)); and Carbamates: 3-iodo-2-propynylbutylcarbamate (IPBC)(PT8, 0.01-0.5% (100-5000 ppm)).

Preferably the total amount of biocide present in the coating composition of the invention is 0.01-2.0 wt%, more preferably 0.05-1.5 wt% and still more preferably 0.1-1.0 wt%, based on the total weight of the composition. It should be understood that the optimal amount of biocide varies depending on which type and/or combination of biocide is employed.

Additives

The coating composition of the present invention preferably comprises one or more other additives. Examples of other components that can be added to the coating composition are pH adjuster/neutralizing agent (e.g. ammonia, 2-aminopropanol, NaOH), dispersing agents, wetting agents, light stabilisers (e.g. hindered amine light stabilisers), UV absorbents, waxes, binders (e.g. poly(meth)acrylates, polyurethanes, silicones, fluoropolymers, polystyrene, polyvinyl (e.g. polyvinyl acetate) and polyolefins), reinforcing agents, adhesion promotors, anti-static agents, flame retardant agents, flash rust inhibitors, anticorrosion agents, lubricants and plasticizers.

Preferably the total amount of additives present in the composition of the invention is an amount of 0-20 wt%, more preferably 0.1-15 wt% and still more preferably 0.1-10 wt%, based on the total weight of the composition.

Coating Composition

A preferred coating composition of the present invention comprises:

(i) an alkyd emulsion as hereinbefore described;
(ii) drier;
(iii) rheology modifier; and
(iv) defoamer.

A further preferred coating composition of the present invention comprises:

(i) 10-70 wt% alkyd emulsion as hereinbefore described;
(ii) 0.05-0.5 wt%, more preferably 0.1-0.4 wt% and still more preferably 0.1-0.3 wt% of drier;
(iii) 0.1-5.0 wt% rheology modifier, still more preferably 0.1-3.0 wt% rheology modifier and yet more preferably 0.2-3.0

wt% rheology modifier;
(iv) 0-13 wt%, more preferably 1-12 wt% and still more preferably 2-12 wt% organic solvent; and
(v) 0.05-2.0 wt%, more preferably 0.1-1.5 wt% and still more preferably 0.1-1.0 wt% defoamer,

wherein wt% is based on the total weight of the composition.

A further preferred coating composition of the present invention comprises:

(i) 10-70 wt% alkyd emulsion as hereinbefore described;
(ii) 0.05-0.5 wt%, more preferably 0.1-0.4 wt% and still more preferably 0.1-0.3 wt% of drier;
(iii) 0.1-5.0 wt% rheology modifier, still more preferably 0.1-3.0 wt% rheology modifier and yet more preferably 0.2-3.0 wt% rheology modifier;
(iv) 0-13 wt%, more preferably 1-12 wt% and still more preferably 2-12 wt% organic solvent; and
(v) 0.05-2.0 wt%, more preferably 0.1-1.5 wt% and still more preferably 0.1-1.0 wt% defoamer;
(vi) 0-25 wt%, more preferably 0-10 wt% and still more preferably 0.5-8 wt% pigments;
(vii) 0-30 wt%, more preferably 0-25 wt% and still more preferably 0-20 wt% extenders and/or filler;

wherein wt% is based on the total weight of the composition.

The present invention also relates to a method for preparing a coating composition as hereinbefore described comprising mixing an alkyd emulsion and water. Any conventional production method may be used.

The composition as described herein may be prepared in a suitable concentration for use, e.g. in brush or rolling application. In this case, the composition preferably is itself a paint, stain, varnish, lacquer or glaze. Alternatively, the composition may be a concentrate preferably for preparation of a paint, stain, varnish, lacquer or glaze. In this case, further solvent, typically water, is added to the composition described herein to form the final paint, stain, varnish, lacquer or glaze. After mixing, and optionally after addition of solvent, e.g. water, the coating composition or paint, stain, varnish, lacquer or glaze is preferably filled into a container. Suitable containers include cans, drums and tanks.

The coating composition is preferably supplied as a one-pack. Thus the composition is preferably supplied in a ready-mixed or ready to use form. Optionally the one-pack product may be tinted with pigments prior to application. A container containing a coating composition forms a further aspect of the invention.

The coating composition or paint, stain, varnish, lacquer or glaze of the present invention preferably has a solids content of 30-65 wt%, more preferably 35-60 wt% and still more preferably 40-55 wt%, based on the total weight of the composition.

The coating composition or paint, stain, varnish, lacquer or glaze of the present invention preferably has a VOC of 0-25 g/L, more preferably 5-20 g/L and still more preferably 7-15 g/L.

The coating composition or paint, stain, varnish, lacquer or glaze of the present invention preferably has a Cone and Plate viscosity of 50-300 cP, more preferably 70-250 cP and still more preferably 80-200 cP. Cone and Plate viscosity is preferably measured as set out in the examples.

The coating composition or paint, stain, varnish, lacquer or glaze of the present invention preferably has a Brookfield viscosity of 500-8000 cP, more preferably 750-5000 cP and still more preferably 1000-3000 cP. The Brookfield viscosity is preferably measured as set out in the examples.

The coating composition or paint, stain, varnish, lacquer or glaze of the present invention preferably has a drying time - T3 of 2-18 hr, more preferably 2-12 hr and still more preferably 2-10 hr. The drying time-T3 is preferably measured as set out in the examples.

The coating composition or paint, stain, varnish, lacquer or glaze of the present invention preferably has a drying time - T4 of 4-48 hr, more preferably 4-35 hr and still more preferably 4-30 hr. The drying time-T4 is preferably measured as set out in the examples.

The coating composition or paint, stain, varnish, lacquer or glaze of the present invention preferably has a Pendulum hardness after 7 days at 23°C of 7-35, more preferably 9-30 and still more preferably 10-30. The Pendulum hardness is preferably measured as set out in the examples.

Application of the coating composition

Application of the coating composition or paint, stain, varnish, lacquer or glaze can be accomplished by any convenient means, e.g. via painting with a brush or roller, onto a surface, e.g. a surface of an article. The coating composition, once dried, forms a film or coating. The film or coating of the present invention therefore comprises the composition as hereinbefore described but with little, or no, water content or solvent. Alternatively defined, the film or coating of the present invention is derived from or obtained from the composition as hereinbefore defined by drying and/or curing. The film or coating formed, especially when the film or coating is on wood, preferably has a thickness of 0-90 μm, more preferably 0-50 μm and still more preferably 0-25 μm.

Suitable substrates that may be coated with the coating composition or herein described include wood, wooden based materials, e.g. MDF, chipboard, metal, stone, plastic, natural and synthetic fibres, glass, ceramics, plaster, concrete, leather, paper, foam or masonry. Preferably the substrate is wood or wooden based material.

Representative examples of surfaces and articles that may be coated with the coating composition or paint, stain, varnish, lacquer or glaze described herein include both interior and exterior articles such as decking, fencing, wall and ceiling surfaces, house structures (e.g. door frames, window frames, exposed beams etc.), furniture (interior and exterior) and sheds. Preferably, however, the coating composition or paint, stain, varnish, lacquer or glaze is for interior articles. Preferably the coating improves the aesthetic appearance of the article.

The present invention also relates to a method of providing a coating on an article (e.g. to prevent degradation of the article and/or give an aesthetic appearance), wherein said method comprises:

applying a composition as hereinbefore described to at least a part of a surface of said article; and
drying and/or curing said composition to form a coating on said surface.

The invention will now be described by the following non-limiting examples

EXAMPLES

**Materials**

Alkyds were prepared by the method set out below using the following raw materials (Table 1). Other materials were purchased commercially.

Table 1

| **Ingredients** | **CAS number** | **Properties** |
|---|---|---|
| Unsaturated fatty acid | | Tall oil fatty acid |
| Saturated fatty acid | 30399-84-9 | Isostearic acid |
| Dimer fatty acid | | Biobased dimer fatty acid made from tall oil fatty acid. Mn=550 g/mol. 81 wt% dimer acid, 2 wt% monomer acid, 17 wt% oligomeric acid. |
| Dipentaeryhtritol | 126-58-9 | Biobased. Containing 6 hydroxyl groups |
| Pentaerythritol | 115-77-5 | Containing 4 hydroxyl groups |
| Glycerol | 56-81-5 | Containing 3 hydroxyl groups |
| Isophthalic acid | 121-91-5 | Diacid from petroleum source. Mn=166 g/mol |
| Azelaic acid | 123-99-9 | Biobased diacid. Mn=188g/mol |
| Drier 1 | | Drier 1 is an iron complex-based primary drier. Metal content: 800 - 1000 ppm Fe. 1 wt% in 1,2 propylene glycol. |
| Drier 2 | | Drier 2 is a cobolt polymer complex, with about 4% cobalt. 80 wt% in 2-methyl-2,4-pentadiol. |

• Synthesis of alkyds

Alkyds are polyesters containing fatty acids. All alkyds were synthesized according to the following procedure:

1. All raw materials (given in the Tables below), together with approximately 6 wt% xylene) were added to the reactor (batch size 1.3 kg).
2. The temperature was increased to 250 °C while stirring and purging with nitrogen gas.
3. Azeotropic distillation with xylene was used to remove water as the reaction proceeded.
4. The reaction was followed by measuring the acid number. When the acid number reached 10 mg KOH/g, xylene was removed from the reaction mixture with vacuum for 30 minutes.
5. The product was cooled down and characterized: acid number, Cone & Plate viscosity and molecular weight determination, by the test methods set out below.

• Characterisation of Alkyds

Determination of Acid number

**[0178]** Acid number was determined in accordance with NS-EN-ISO 2114:2000, Method A, and reported as the amount, in milligrams, of potassium hydroxide used to neutralize 1 g of alkyd.

Determination of the Cone and Plate viscosity

The viscosity of the alkyds was determined according to ISO 2884-1:2006 using a Cone and Plate viscometer set at a temperature of 23 °C, working at a shear rate of 10000 $s^{-1}$, providing a viscosity measurement range of 0-10 P. The samples were tempered in a 23 °C 50% RH climate room for at least 18 hours prior to viscosity measurements. The result given is the average of three measurements. The spindle CAP03 was used and the Cone and Plate viscometer was set at a temperature of 50°C.

Determination of Molecular Weight distribution of polymers

The alkyds were characterised by Gel Permeation Chromatography (GPC) measurement. The molecular weight distribution (MWD) was determined using a Malvern Omnisec Resolve and Reveal system. The analysis conditions were as set out in Table 2 below.

Table 2

| | |
|---|---|
| Detector | RI |
| Wavelength | 640 nm |
| Flow cell volume | 12 µl |
| Column Set | Agilent PL-Gel Mixed D , 2 columns in series |
| Mobile Phase | THF |
| Flow rate | 1 ml/min |
| Injection volume | 100 µl |
| Autosampler Temperature | 20 °C |
| Column Oven Temperature | 30 °C |
| Detector Oven Temperature | 30 °C |
| Data Processing | Omnisec 5.1 |
| Calibration standards | Agilent Polystyrene Medium EasiVials (4 ml) Red, Yellow and Green |

Samples were prepared by dissolving an amount of polymer solution corresponding to 25 mg dry polymer in 5 ml THF. The samples were kept for a minimum of 3 hours at room temperature prior to sampling for the GPC measurements. Before analysis the samples were filtered through 0.45 µm Nylon filters. The number-average molecular weight (Mn), weight-average molecular weight (Mw) and the polydispersity index (PDI) were determined.

• Emulsification of Alkyds

The alkyd emulsions were made by an inverse emulsification process, sometimes called catastrophic phase inversion. (Galindo-Alvarez, Johanna et al Industrial & Engineering research. 50, 2011, 5575-5583). The batch size was 2.0 kg, including water.

First the alkyd (46.0 wt%), surfactants (4.3 wt%) and neutralizing agent (2-amino-2-methyl-1-propanol, 0.3 wt%) were added to a temperature-controlled container. The temperature was kept at 50 °C during the emulsification. Water (49.4 wt%) was added continuously over 20 minutes while stirring. During this process the mixture goes from a water in oil emulsion to an oil in water emulsion.

The emulsions were characterized by solid content, pH, Brookfield viscosity and particle size determination by the test methods set out below.

• Characterisation of Alkyd Emulsions

pH

The pH was determined according to NS-ISO 976:2013 using an InoLab pH 7110 pH-meter, with a SenTix 81 combined glass and silver reference electrode. Both units were from WTW. The pH-meter was calibrated before use with commercial buffer solutions from Hamilton of pH 7.00 and 10.01 at a temperature 23 ± 3 °C. Samples were tempered to 23 ± 3 °C and mixed to ensure that they were homogeneous before measurement. Prior to the measurement, the electrode cap to the filling hole was removed. The electrode was immersed into the sample and the pH reading was allowed to stabilise before recording the pH.

Determination of particle size of alkyd emulsions

Particle size analyses were performed according to ISO 22412:2017 by using a Malvern Zetasizer Nano S utilizing Dynamic Light Scattering (DLS). Optical arrangement for DLS was homodyne detection (backscattering detection). Computational unit evaluation was done via autocorrelation function. Evaluation of results was done via correlation analysis using cumulant method. Temperature = 25 °C. The measured particle size is reported as the Z-average diameter.

Determination of Brookfield viscosity

Low shear viscosity was measured in accordance with ASTM D 2196 standard, using a Brookfield RVT230 instrument, spindle 4 at 20 rpm. The samples were tempered to 23.0°C ± 0.5°C before the measurements.

Storage stability of alkyd emulsions

The alkyd emulsion was kept at 50°C for 4 weeks in a sealed container. The particle size was measured as described above (Determination of particle size of alkyd emulsions.

• General procedure for the preparation of coating composition

The components of the coating composition were mixed in the proportions (wt%) given in the tables below. Comparative compositions based on the comparative alkyds and comparative emulsions described above were also prepared and tested. The composition of these comparative compositions is also set out in the tables.

Raw materials were added stepwise, under constant stirring to produce a composition. The stirring speed varies with demand, during the process. The test formulations were made in a 1 L can. For the 1L can, a 65 mm stirrer was used.

• Characterisation of compositions

Calculation of solid content of the stain compositions

The solids content of the stain compositions was calculated in accordance with ASTM D5201-05a (2020).

Calculation of Volatile Organic Compounds (VOC)

The Volatile Organic Compounds, VOC (g/L), of the compositions was calculated as follows:

$$\text{VOC [g/L]} = \frac{\text{total weight VOC [g]}}{(weight\ paint\ /\ density\ paint)\ \text{[L]}}$$

pH

The pH was determined by the same method as set out above for alkyd emulsions.

Cone and Plate Viscosity

The viscosity of the compositions was determined according to ISO 2884-1:2006 using a Cone and Plate viscometer set at a temperature of 23 °C, working at a shear rate of 10000 $s^{-1}$, providing a viscosity measurement range of 0-10 P. The samples were tempered in a 23 °C 50% RH climate room for at least 18 hours prior to viscosity measurements. The result given is the average of three measurements. A Brookfield CAP 1000+ Viscometer with spindle CAP02 was used

for the stain compositions.

Determination of Brookfield viscosity

Low shear viscosity was measured in accordance with ASTM D 2196 standard, using a Brookfield RVT230 instrument, spindle 5 at 5 rpm. The samples were tempered to 23.0°C ± 0.5°C before the measurements.

Drying time

A Beck Koller drying time recorder was used to estimate the drying times and drying stages (T3, T4; see Table 3 below) of the compositions. Each composition was applied with a 120 µm steel frame applicator onto a 30 cm × 2 cm glass rod at 23 °C and 50 % RH and placed directly underneath a metal needle mounted on the Beck Koller apparatus. The pin of the metal needle then moves along the coating on the glass rod at a speed of 30 cm in 2 hours to record the state of the coating at all times. The estimation of each drying stage (T3, T4) are based on triplicate runs of each composition. T3 and T4 Drying times in the Tables are given in hours (h).

Table 3

| | Drying stage |
|---|---|
| T3 | Surface hardening commenced (hard dry time). The needle no longer makes holes in the coating but rather a slight mark on top of the coating. |
| T4 | Surface hard (through-dry time). The needle is no longer making a mark on top of the coating. |

Coating hardness - König pendulum hardness

Pendulum hardness tests were performed according to the ASTM D4366-95 Test method A. Each of the compositions was applied to a transparent glass plate (75×150×2 mm) using a coating applicator with 200 µm gap size. The coatings were dried for 7 days at 23 °C. The coating hardness of the resulting dry coating was measured at 23 °C using Erichsen 299/300 pendulum hardness tester. The results (count number) are shown in the Tables below.

**Results**

The properties of alkyds P1-P4 are shown in Table 4 below.

Table 4: Alkyds

| | **P1** | | **P2** | | **P3** | | **P4** | |
|---|---|---|---|---|---|---|---|---|
| **Ingredients** | wt% | mol% | wt% | mol% | wt% | mol% | wt% | mol% |
| Unsaturated fatty acid | 62,3 | 54,2 | 67,5 | 58,8 | 75,0 | 69,4 | 62,1 | 51,7 |
| Saturated fatty acid | 5,2 | 4,6 | | | | | | |
| Dimer fatty acid | 16,9 | 28,9 | 16,9 | 28,9 | 9,8 | 17,8 | 22,4 | 36,6 |
| Dipentaerythritol | 15,6 | 12,3 | 15,6 | 12,3 | 15,2 | 12,8 | 15,5 | 11,7 |
| Total | 100 | 100 | 100 | 100 | 100 | 100 | 100 | 100 |
| | | | | | | | | |
| Oil length | 67,5 | | 67,5 | | 75,0 | | 62,1 | |
| Ratio OH/COOH (mol) | | 1,25 | | 1,25 | | 1,25 | | 1,25 |
| **Test results** | | | | | | | | |
| Acid number (mg KOH/g) | 8,9 | | 8,4 | | 8,8 | | 8,5 | |
| Cone & Plate viscosity (50 °C) (P) | 4,6 | | 4,7 | | 8,1 | | 4,5 | |
| GPC, Mw | 7300 | | 7483 | | 4128 | | 17415 | |
| GPC, Mn | 2050 | | 2027 | | 1711 | | 2277 | |

The properties of emulsions E1-E4 are shown in Table 5 below.

Table 5

| | E1 | E2 | E3 | E4 |
|---|---|---|---|---|
| Alkyd polymer | P1 | P2 | P3 | P4 |
| Particle size (nm) | 213 | 220 | 232 | 214 |
| PDI | 0,058 | 0,054 | 0,082 | 0,038 |
| pH | 8,8 | 5,9 | 8,6 | 8,6 |
| Measured solid content (wt%) | 50,6 | 50,9 | 51,6 | 51,0 |
| Brookfield viscosity (cP) | 1150 | 1270 | 1500 | 1490 |
| Storage stability - change in particle size (%) | 2,4% | 2,3% | 1,7% | 0,5% |

The properties of comparative alkyds P5-P8 and comparative emulsions E5-E8 are shown in Tables 6 and 7 below. Alkyds P5 and P6 comprise pentaerythritol or glycerol instead of dipentaerythritol. Alkyds P7 and P8 comprise isophthalic acid or azelaic acid instead of dimer fatty acid. Pentaerythritol and glycerol are conventional components of alkyds. Isophthalic acid acid is a common petroleum derived diacid present in conventional alkyds. Azelaic Acid is another biobased diacid.

The comparative emulsion E7 comprising isophthalic acid has very poor stability.

Table 6. Comparative alkyds

| | P5 | | P6 | | P7 | | P8 | |
|---|---|---|---|---|---|---|---|---|
| **Ingredients** | wt% | mol% | wt% | mol% | wt% | mol% | wt% | mol% |
| Unsaturated fatty acid | 64,3 | 58,37 | 65,4 | 59,98 | 70,7 | 73,55 | 70,1 | 72,85 |
| Saturated fatty acid | 5,4 | 4,97 | 5,3 | 4,93 | 5,9 | 6,23 | 5,8 | 6,11 |
| Dimer fatty acid | 17,3 | 30,85 | 17,5 | 31,53 | | | | |
| Dipentaerythritol | | | | | 17,7 | 16,70 | 17,5 | 16,50 |
| Pentaerythritol | 13,0 | 5,82 | | | | | | |
| Glycerol | | | 11,8 | 3,56 | | | | |
| Isophthalic acid | | | | | 5,7 | 3,52 | | |
| Azelaic acid | | | | | | | 6,5 | 4,54 |
| Total | 100 | 100 | 100 | 100 | 100 | 100 | 100 | 100 |
| | | | | | | | | |
| Oil length | 69,7 | | 70,7 | | 70,7 | | 70,1 | |
| Ratio OH/COOH (mol) | | 1,25 | | 1,25 | | 1,25 | | 1,25 |
| **Test results** | | | | | | | | |
| Acid number (mg KOH/g) | 9,0 | | 7,7 | | 7,7 | | 8,6 | |
| Cone & Plate viscosity (50°C) (P) | 1,6 | | 0,8 | | 3,0 | | 2,5 | |
| GPC, Mw | 3201 | | 2140 | | 4211 | | 5140 | |
| GPC, Mn | 1427 | | 1169 | | 2032 | | 1851 | |

Table 7. Comparative alkyd emulsions

| | E5 | E6 | E7 | E8 |
|---|---|---|---|---|
| Alkyd polymer | P5 | P6 | P7 | P8 |
| Particle size (nm) | 204 | 240 | 606 | 222 |

(continued)

| | E5 | E6 | E7 | E8 |
|---|---|---|---|---|
| PDI | 0,091 | 0,122 | 0,598 | 0,061 |
| pH | 8,9 | 8,5 | 8,5 | 8,6 |
| Measured solid content (wt%) | 50,5 | 50,4 | 51,0 | 50,7 |
| Brookfield viscosity (cP) | 750 | 930 | 90 | 1510 |
| Storage stability - change in particle size (%) | 0,6% | 3,8% | 57% | 2,2% |

The properties of the compositions of the invention, as well as those of comparative compositions comprising the comparative alkyds and comparative emulsions are summarised in Table 8 below.

Table 8.

| **Ingredients (wt%)** | **C1** | **C2** | **C3** | **C4** | **C5** | **C6** | **C7** | **C8** |
|---|---|---|---|---|---|---|---|---|
| Alkyd emulsion E1 | 90,7 | | | | | | | |
| Alkyd emulsion E2 | | 90,7 | | | | | | |
| Alkyd emulsion E3 | | | 90,7 | | | | | |
| Alkyd emulsion E4 | | | | 90,7 | | | | |
| Alkyd emulsion E5 | | | | | 90,7 | | | |
| Alkyd emulsion E6 | | | | | | 90,7 | | |
| Alkyd emulsion E7 | | | | | | | 90,7 | |
| Alkyd emulsion E8 | | | | | | | | 90,7 |
| Mono propylene glycol | 0,92 | 0,92 | 0,92 | 0,92 | 0,92 | 0,92 | 0,92 | 0,92 |
| Wetting agent | 0,43 | 0,43 | 0,43 | 0,43 | 0,43 | 0,43 | 0,43 | 0,43 |
| Drier 1 | 0,67 | 0,67 | 0,67 | 0,67 | 0,67 | 0,67 | 0,67 | 0,67 |
| Drier 2 | 0,58 | 0,58 | 0,58 | 0,58 | 0,58 | 0,58 | 0,58 | 0,58 |
| Water | 3,9 | 3,9 | 3,9 | 3,9 | 3,9 | 3,9 | 3,9 | 3,9 |
| Defoamer | 0,19 | 0,19 | 0,19 | 0,19 | 0,19 | 0,19 | 0,19 | 0,19 |
| Rheology modifier 1 (20 wt% in water) | 1,8 | 1,8 | 1,8 | 1,8 | 1,8 | 1,8 | 1,8 | 1,8 |
| Rheology modifier 2 (38 wt% in water) | 0,69 | 0,69 | 0,69 | 0,69 | 0,69 | 0,69 | 0,69 | 0,69 |
| 2-amino-2-methyl-1-propanol | 0,11 | 0,11 | 0,11 | 0,11 | 0,11 | 0,11 | 0,11 | 0,11 |
| Total | 100 | 100 | 100 | 100 | 100 | 100 | 100 | 100 |
| Theoretical solid content (wt%) | 47,1 | 47,1 | 47,1 | 47,1 | 47,1 | 47,1 | 47,1 | 47,1 |
| Calculated VOC (g/L) | 10 | 10 | 10 | 10 | 10 | 10 | 10 | 10 |
| pH | 8,9 | 8,5 | 8,4 | 8,7 | 9,4 | 8,9 | 8,5 | 8,9 |
| **Test results** | | | | | | | | |
| Cone & Plate viscosity (cP) | 100 | 97 | 87 | 87 | 218 | 155 | 133 | 94 |
| Brookfield viscosity (cP) | 2260 | 2320 | 2180 | 2560 | 2140 | 1980 | 1360 | 2300 |
| Drying time - T3 (h) | 4 | 3 | 4 | 3 | 8 | >48 | 18 | 5 |
| Drying time - T4 (h) | 29 | 4 | 10 | 7 | >48 | >48 | >48 | >48 |
| Pendulum hardness - after 7 days | 20 | 19 | 17 | 20 | 8 | 0 | 12 | 28 |

The results show that alkyd emulsions comprising an alkyd comprising a dimer fatty acid and dipentaerythritol produce coating compositions having desirably short drying times reflecting a relatively fast curing process, as well as

coatings having a high level of hardness (after 7 days) indicating the resulting coatings will be mechanically robust. The viscosity of these coating compositions also makes them easy to apply to substrates.

The results show that the alkyd must comprise both a dimer fatty acid and dipentaerythritol. The importance of the dimer fatty acid can be seen by comparing the results for C1-C4, which contain alkyd emulsion according to the invention, and C7 and C8 which contain alkyd emulsion wherein the alkyd comprises isophthalic acid and azelaic acid instead of dimer fatty acid. Whereas C1-C4 compositions have relatively short drying times, and produce coatings of high hardness, the C7 and C8 have significantly longer drying times and C7 additionally has a lower hardness.

The importance of the dipentaerythritol can be seen by comparing the results for C1-C4, which contain alkyd emulsion according to the invention, and C5 and C6 which contain alkyd emulsion wherein the alkyd comprises pentaerythritol or glycerol instead of dipentaerythritol. Whereas C1-C4 compositions have relatively short drying times, and produce coatings of high hardness, the C5 and C6 compositions have significantly longer drying times and yield less hard coatings.

Without wishing to be bound by theory, it is thought that the improved performance of the coating compositions of the invention derives from the fact that dipentaerythritol has 6 hydroxy groups, and therefore allows for more fatty acids, and more double bonds, to be introduced per molecule. The higher concentration of double bonds via the increased number of fatty acids is believed to lead to faster curing, and therefore shorter drying times. Advantageously, these benefits have been realized without impacting on the viscosity of the alkyd emulsions or the resulting compositions, meaning applicability is retained.

## Claims

**1.** An alkyd emulsion comprising an alkyd and water, wherein said alkyd comprises, preferably consists essentially of:

(i) 8.0-20 wt% dimer fatty acid, preferably a biobased dimer fatty acid;
(ii) 10-25 wt% dipentaerythritol, preferably biobased dipentaerythritol; and
(iii) 50-80 wt% unsaturated fatty acid,

wherein wt% is based on the total weight of said alkyd.

**2.** An emulsion as claimed in claim 1, wherein said alkyd comprises 10-18 wt%, and more preferably 12-16 wt% dimer fatty acid, based on the total weight of said alkyd.

**3.** An alkyd emulsion comprising an alkyd and water, wherein said alkyd comprises, preferably consists essentially of:

(i) 10-25 wt% of dimer fatty acid, and oligo fatty acid, wherein at least 70 wt% of said fatty acids is dimer fatty acid;
(ii) 10-25 wt% dipentaerythritol, preferably biobased dipentaerythritol; and
(iii) 50-80 wt% of unsaturated fatty acid,

wherein the wt% of each of (i), (ii) and (iii) is based on the total weight of said alkyd.

**4.** An emulsion as claimed in any one of claims 1 to 3, wherein said alkyd comprises 12-22 wt%, and more preferably 15-20 wt% dipentaerythritol, preferably biobased dipentaerythritol, based on the total weight of said alkyd.

**5.** An emulsion as claimed in any one of claims 1 to 4, wherein said alkyd has an oil length of 50-80 %, more preferably 55-78 wt% and still more preferably 60-75 wt%.

**6.** A method of making an alkyd emulsion as claimed in any one of claims 1 to 5, comprising mixing water and an alkyd comprising dimer fatty acid, dipentaerythritol and unsaturated fatty acid.

**7.** Use of an alkyd emulsion as claimed in any one of claims 1 to 5 for preparation of a coating composition.

**8.** A coating composition comprising an alkyd emulsion as claimed in any one of claims 1 to 5.

**9.** A method for preparing a coating composition as claimed in claim 8, comprising mixing an alkyd emulsion and water.

**10.** A paint, stain, varnish, lacquer or glaze comprising an alkyd emulsion as claimed in any one of claims 1 to 5.

**11.** A container containing a coating composition as claimed in claim 8.

**12.** A surface having a coating thereon, wherein said coating comprises the composition as claimed in claim 8.

**13.** An article comprising a coating on at least a part of a surface thereof, wherein said coating comprises the composition as claimed in claim 8.

**14.** A method of providing a coating on an article (e.g. to prevent degradation of the article and/or give an aesthetic appearance), wherein said method comprises:

applying a composition as claimed in claim 8 to at least a part of a surface of said article; and
drying and/or curing said composition to form a coating on said surface.

**15.** Use of a composition as claimed in claim 8 for forming a coating on at least a part of a surface of an article (e.g. to prevent degradation thereof and/or give an aesthetic appearance).

Europäisches Patentamt
European Patent Office
Office européen des brevets

# EUROPEAN SEARCH REPORT

Application Number
EP 24 21 8417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | SE 529 767 C2 (PERSTORP SPECIALTY CHEM AB [SE]) 20 November 2007 (2007-11-20)<br>* Claims *<br>* Examples *<br>----- | 1-15 | INV.<br>C08G63/48<br>C08G63/553<br>C09D167/08 |
| Y | WO 2011/051612 A1 (CENTRE NAT RECH SCIENT [FR]; D V I LABO [FR] ET AL.)<br>5 May 2011 (2011-05-05)<br>* Examples *<br>----- | 1-15 | |
| Y | EP 3 470 481 A1 (JOTUN AS [NO])<br>17 April 2019 (2019-04-17)<br>* paragraphs [0046], [0048]; claims 1-15 *<br>----- | 1-15 | |
| Y | WO 2013/128132 A1 (NOVANCE [FR])<br>6 September 2013 (2013-09-06)<br>* Examples;<br>claims 1-15 *<br>----- | 1-15 | |
| | | | TECHNICAL FIELDS SEARCHED (IPC) |
| | | | C08G<br>C09D |

The present search report has been drawn up for all claims

1

| Place of search | Date of completion of the search | Examiner |
|---|---|---|
| The Hague | 7 May 2025 | Pouilley, Delphine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 21 8417

This annex lists the patent family members relating to the patent documents cited in the above-mentioned European search report. The members are as contained in the European Patent Office EDP file on
The European Patent Office is in no way liable for these particulars which are merely given for the purpose of information.

07-05-2025

| Patent document cited in search report | | Publication date | Patent family member(s) | | Publication date |
|---|---|---|---|---|---|
| SE 529767 | C2 | 20-11-2007 | ------------------------------------ | | |
| WO 2011051612 | A1 | 05-05-2011 | EP 2493989 | A1 | 05-09-2012 |
| | | | FR 2951730 | A1 | 29-04-2011 |
| | | | WO 2011051612 | A1 | 05-05-2011 |
| EP 3470481 | A1 | 17-04-2019 | DK 3470482 | T3 | 30-10-2023 |
| | | | EP 3470481 | A1 | 17-04-2019 |
| | | | EP 3470482 | A1 | 17-04-2019 |
| WO 2013128132 | A1 | 06-09-2013 | EP 2820064 | A1 | 07-01-2015 |
| | | | FR 2987623 | A1 | 06-09-2013 |
| | | | WO 2013128132 | A1 | 06-09-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- *Journal of Analytical and Applied Pyrolysis*, 04 February 1991, vol. 18 (3), 233-244
- **GALINDO-ALVAREZ, JOHANNA et al.** *Industrial & Engineering research.*, 2011, vol. 50, 5575-5583